Europäisches Patentamt

European Patent Office

Office européen des brevets

(11) Publication number: **0 163 456**
**B1**

(12) EUROPEAN PATENT SPECIFICATION

(45) Date of publication of patent specification: **02.01.91**

(21) Application number: **85303452.8**

(22) Date of filing: **16.05.85**

(51) Int. Cl.⁵: **H 02 P 5/165**

(54) Control system.

(30) Priority: **30.05.84 JP 110264/84**

(43) Date of publication of application:
**04.12.85 Bulletin 85/49**

(45) Publication of the grant of the patent:
**02.01.91 Bulletin 91/01**

(84) Designated Contracting States:
**DE FR GB**

(56) References cited:
**PATENT ABSTRACTS OF JAPAN, vol. 7, no. 233
(E-204)1378r, 15th October 1983; & JP - A - 58
123 386**

**PATENT ABSTRACTS OF JAPAN, vol. 5, no. 44
(E-50)716r, 24th March 1981; & JP - A - 55 166
488**

(73) Proprietor: **KABUSHIKI KAISHA TOSHIBA
72, Horikawa-cho Saiwai-ku
Kawasaki-shi Kanagawa-ken 210 (JP)**

(72) Inventor: **Kurosawa, Ryoichi c/o Patent Division
Toshiba Corporation Principal Office
1-1, Shibaura 1-chome Minato-ku Tokyo (JP)**

(74) Representative: **Kirk, Geoffrey Thomas et al
BATCHELLOR, KIRK & CO. 2 Pear Tree Court
Farringdon Road
London EC1R 0DS (GB)**

## Description

This invention relates to a system for controlling a controllable variable and, in particular, to an electric motor speed control system.

In this specification, the invention will be described taking a motor speed control system as an example.

In a motor speed control system, a speed detector coupled to the motor is usually provided, and the detected speed value derived from the detector is compared with a speed command value so that the current of a power converter is controlled, whereby a feedback control is performed.

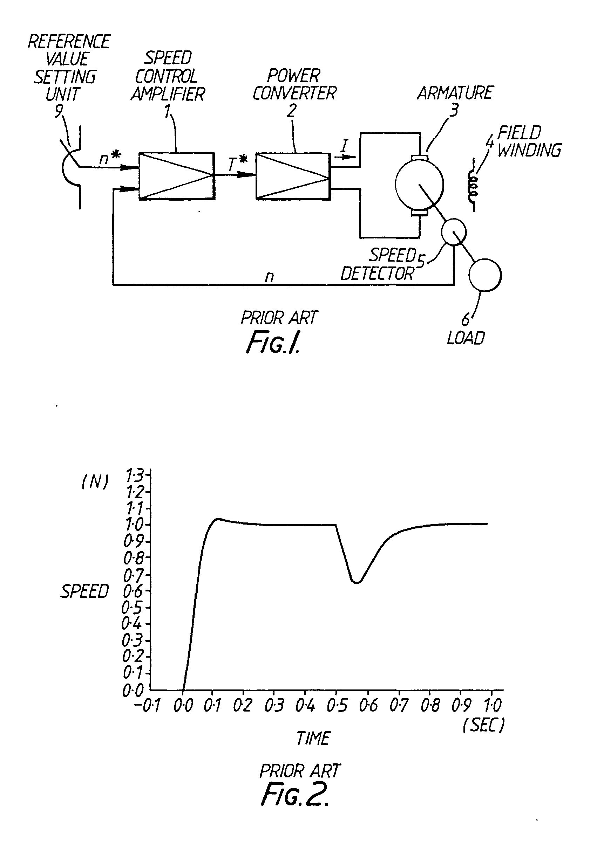

Figure 1 of the accompanying drawings shows a fundamental configuration of a speed control system that controls the speed of a DC motor in a feedback control fashion.

Reference numeral 1 designates a speed control amplifier, 2 a power converter, 3 and 4 the armature and a field winding of the DC motor, respectively, 5 a speed detector, and 6 a load. An exciting circuit for the field winding 4 is not shown. The power converter 2 includes controlled rectifiers, choppers and a current control circuit that controls an output current I.

Here, it is assumed that the power converter 2 can be regarded as a current amplifier that controls the output current thereof in accordance with a current command value.

The speed control amplifier 1 receives a speed command signal n* which is produced in a reference value setting unit 9, and a detected speed n, so as to produce a torque command value signal T* corresponding to a torque value required for the motor. In the case of a DC motor, its torque and armature current are in a proportional relationship so that the torque command value signal T* is inputted to the power converter 2 as the current command value signal.

This causes the power converter 2 to feed the current I into the armature of the motor, so that the motor produces a torque proportional to the torque command value signal T*, whereby the speed thereof is varied. This speed n is detected by the speed detector 5 and fed back to the speed control amplifier 1.

The predominant facts as characteristics of the speed control system are such that the motor speed can respond rapidly and accurately in response to changes in the speed command value and that the motor speed change in response to variations in the load can be kept to a minimum and the motor speed can be rapidly returned to its original value. The former is defined as a command value response characteristic, and the latter a disturbance response characteristic. The predominant component to determine these system characteristics is the speed control amplifier 1.

The conventional speed control amplifier is usually a so-called control amplifier, such as a proportional control amplifier, a proportional integral control amplifier, or a proportional integral control amplifier with compensation for anti-overshoot.

Various alternative control amplifiers may be used depending on the requirements. However, these control amplifiers are designed such that a command value response is regarded as of major importance, and a disturbance response is, in general, slower than the command value response.

Figure 2 illustrates a command value response and a disturbance response where a proportional integral control amplifier with anti-overshoot compensation is used as a speed control amplifier. In Figure 2, the abscissa and ordinate represent time (second) and speed (n), respectively. At time 0.0 second, a speed command is changed from 0 to 1 and, at time of 0.5 second, a certain constant load is applied to the motor and the response thereat is shown.

The command value response time is approximately 0.1 second, while the disturbance response time is approximately 0.3 second, and the ratio of these response times is approximately 3.

The motor speed control system is used, for example, to drive a rolling mill for rolling steel and, in this application, when the steel first passes between the mill rolls, there is applied an abrupt drastic load and, if the disturbance response characteristic is not superior, it is difficult to ensure uniform thickness of the rolled steel. Thus, superiority of the disturbance response, rather than the command value response, is regarded to be of major importance.

An object of this invention is to provide a control system having an improved disturbance response characteristic.

According to the present invention there is provided a control system comprising:

detector means for detecting the value (n) of a controllable variable;

means for producing a reference value (n*);

control amplifier means, connected to receive said detected value (n) and said reference value (n*), and to produce a first command value (TA) for use in reducing any difference between the detected value (n) and said reference value (n*); and

power converter means for controlling said controlled variable (n) according to said first command value (TA),

characterised by the provision of

a control processing means, connected to receive said detected value (n) and said first command value (TA), and to produce a second command value (T*);

said control processing means including

means for providing a first signal (A) the Laplace transform of which equals the product of a first predetermined transfer function Gx(s) and the Laplace transform of said detected value (n),

means for providing a second signal (B) the Laplace-transform of which equals the product of a second transfer function 1+Gx(s) · GLH(s) and of the Laplace-transform of said first command value (TA), and;

means for providing as said second command value (T*) the difference between said first (A) and second (B) signals, wherein the transfer function GLH(s) is the simulation of the transfer function of the process (GL(s)=n(s)/T*(s)) and wherein the power converting means is controlled according to said second command value (T*).

Further according to the present invention there is provided motor speed control system comprising:

speed detector means for detecting the speed (n) of the motor;

means for producing a reference speed value (n*);

speed control amplifier means connected to receive said detected speed value (n) and said reference speed value (n*), and to produce a first command value (TA) for use in reducing any difference between the detected speed value (n) and said reference speed value (n*); and

power converter means for controlling said speed (n) of the motor according to said first command value (TA);

characterised by the provision of

control processing means, connected to receive said detected speed value (n) and said first command value (TA) and to produce a second command value (T*);

said control processing means including

means for providing a first signal (A) the Laplace transform of which equals the product of a first predetermined transfer function Gx(s) and the Laplace transform of said detected value (n),

means for providing a second signal (B) the Laplace-transform of which equals the product of a second transfer function 1+Gx(s) · GLH(s) and of the Laplace-transform of said first command value (TA), and;

means for providing as said second command value (T*) the difference between said first (A) and second (B) signals, wherein the transfer function GLH(s) is the simulation of the transfer function of the process (GL(s)=n(s)/T*(s)) and wherein the power converting means is controlled according to said second command value (T*).

In order that the invention may be more readily understood, it will now be described, by way of example only, with reference to the accompanying drawings, in which:—

Figure 3 is a block diagram illustrating an embodiment of the invention;

Figure 4 is a block diagram illustrating the principle of the invention and employing a transfer function representation;

Figure 5 is a block diagram illustrating an embodiment of a speed control system according to the invention; and

Figures 6A, 6B, 6C and Figures 7A, 7B and 7C are views representing different response characteristics of the system according to the invention.

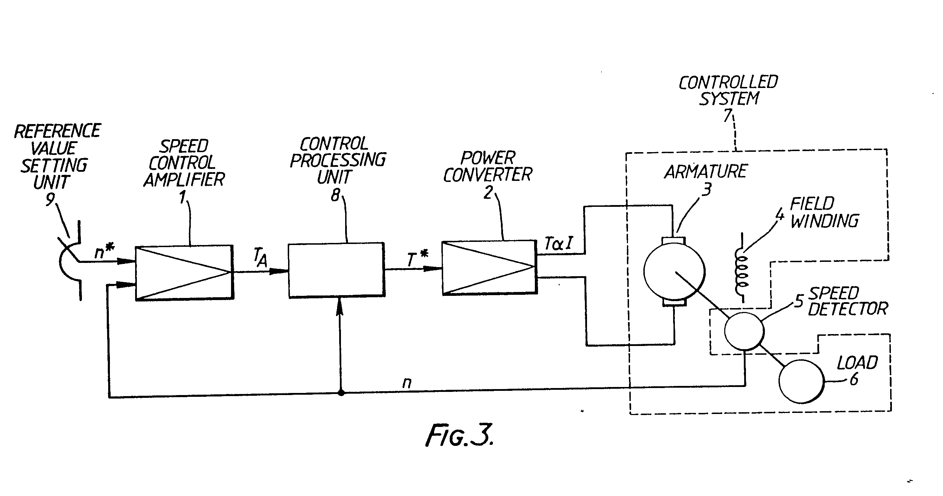

In Figure 3, a control processing unit 8 is shown added to the speed control system shown in Figure 1.

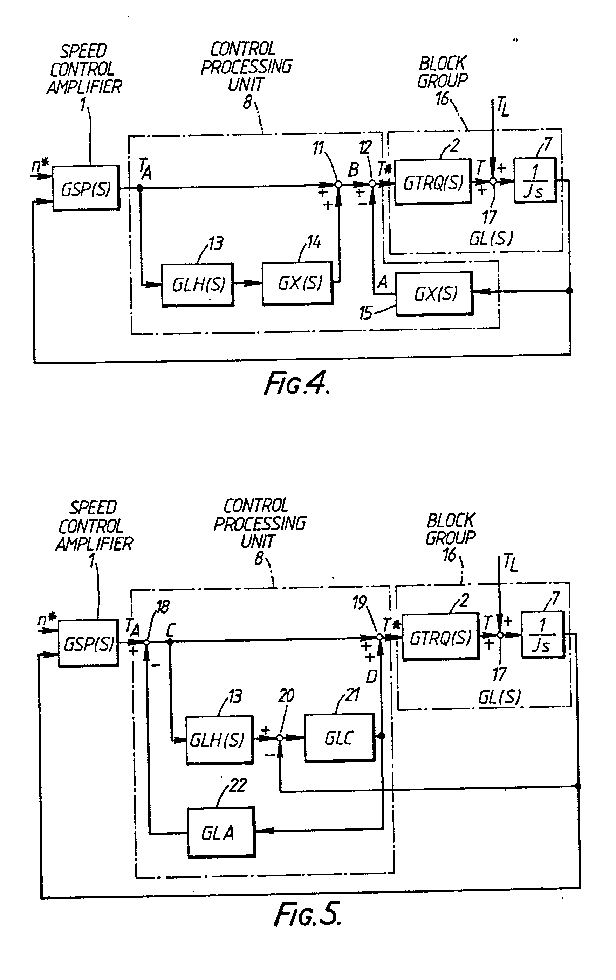

In Figure 4, the speed control system shown in Figure 3 is shown in a transfer function representation. Reference numerals 11 and 12 represent summation devices, references 13, 14 and 15 are blocks marked with the respective transfer functions, reference 16 represents a block group including the converter, the motor and the load, reference 2 represents a transfer function of the power converter which is from a torque command value signal T* to a generated motor torque signal T, reference 17 represents a summing junction to which a load torque TL is applied, and reference 7 represents the sum of the force of inertia of the motor and the load. Reference character J designates the force of inertia, and S a Laplace operator, respectively.

When a transfer function which is from the torque command value signal T* of the block group 16 to the speed signal n is defined as GL(S), the transfer function GL(S) can be expressed by the equation (1).

$$GL(S)=GTRQ(S) \cdot 1/JS \qquad (1)$$

In the conventional system, there is no control processing unit, so the torque command value signal T* equals the output TA of the control amplifier 1, and the transfer function GL(S) is also a transfer function which is from the output of the control amplifier 1 in the conventional system to the speed signal n.

Next, a transfer function n(S)/B(S), which is from the input B of the summation device 12 to the speed signal n, in the case where the block 15 represented by the transfer function GX(S) is added, is expressed by the equation (2).

$$\frac{n(S)}{B(S)} = \frac{GL(S)}{1+GX(S) \cdot GL(S)} \qquad (2)$$

Next, a transfer function B(S)/TA(S), which is from the output TA of the control amplifier 1 to the above-described B, is expressed by the equation (3), where the block 14 has the transfer function GX(S) which is identical with that of the block 15, and a transfer function of the block 13 is GLH(S).

$$\frac{B(S)}{TA(S)}=1+GX(S) \cdot GLH(S) \tag{3}$$

Thus, a transfer function n(S)/TA(S), which is from the output TA of the control amplifier 1 to the speed n, can be expressed by the equation (4).

$$\frac{n(S)}{TA(S)}=(n(S)/B(S)\times(B(S)/TA(S)))$$

$$=\frac{1+GX(S) \cdot GLH(S)}{1+GX(S) \cdot GL(S)} \cdot GL(S) \tag{4}$$

Here, if a transfer function GLH(S) of the block is selected equally to the transfer function GL(S), the equation (4) becomes the equation (5).

$$\frac{n(S)}{TA(S)}=GL(S) \tag{5}$$

Therefore, if the transfer function GLH(S) of the block 13 is set to the transfer function GL(S), which is from the torque command value signal T* to the speed signal n, even when the control processing unit 8 according to the present invention is added, the transfer function which is from the output TA of the control amplifier 1 to the speed signal n is not varied compared to the conventional example, and there exists no change in terms of the command value response.

Here, a speed response nLNEW(S), in the case where a load TL(S) is applied, can be obtained as follows:—

If a transfer function which is from the detected speed value n, which is the feedback input of the control amplifier 1 to the output TA thereof, is defined as a transfer function GSP(S), the transfer function nLNEW(S) can be expressed by the equation (6).

$$nLNEW(S)=\frac{1/JS}{1+GSP(S) \cdot GL(S)} \cdot \frac{1}{1+GL(S) \cdot GL(S)} \cdot TL(S) \tag{6}$$

A speed response nLOLD(S) in the conventional example can be obtained when assuming that GX(0)=0 in the equation (6), and can be expressed by the equation (7).

$$nLOLD(S)=\frac{1/JS}{1+GSP(S) \cdot GL(S)} \cdot TL(S) \tag{7}$$

Therefore, when compared to the conventional example, the disturbance response according to the present invention is changed only by the equation (8).

$$\frac{1}{1+GX(S) \cdot GL(S)} \tag{8}$$

Thus, if the transfer function GX(S) is appropriately selected, the disturbance response can be improved while the command value response is not affected.

The transfer function GX(S) can be basically arbitrarily selected, however, it should be selected within such an extent that the transfer function expressed by the equation (8) does not have unstable or oscillatory components.

In Figure 5, there is specifically shown the embodiment according to the present invention. This embodiment is an example such that improvement advantages of the preferable disturbance response can be acquired, in addition, its setting adjustment can be readily made. The control processing unit 8 is the portion particularly added according to the present invention. Reference numerals 18, 19 and 20 designate summation devices, 13 a simulated transfer function block which includes the transfer function GLH(S) that simulates the transfer function GL(S), which is from the torque command value signal T* identical with the aforementioned to the speed n, and reference numerals 21, 22 are coefficient blocks that multiply the respective input values by the respective coefficients (such as GLC, GLA) represented within the respective blocks.

A signal D, which is the output of the coefficient block 21 is fed into the coefficient block 22 so as to be multiplied by the coefficients GLA, and the thus multiplied signal and the output TA of the control amplifier 1 are fed into the summation device 18 so as to be processed in subtraction producing a signal C. The signal C is then fed into the simulated transfer function block 13, and the output thereof and the detected speed value n are fed into the summation device 20 so as to be processed in subtraction. The output of the summation device 20 is fed into the coefficient block 21 so as to be multiplied by the coefficient GLC producing the signal D. On the other hand, the signal C is also fed, together with the signal D, into the summation device 19 so as to be processed in addition thereby producing the torque command value signal T*.

In general, a transfer function GTRQ(S), represented by the block 2, which is from the torque command value signal T* to a generated motor signal T, can be approximated by a first-order lag transfer function, and a transfer function 1/JS, represented by the block 7, which is determined by the force of inertia J signifies integration, so that, in order to realise the transfer function GLH(S) of the simulated transfer function block 13, a first-order lag circuit (equivalent to a low pass filter) and an integrator are appropriate to be employed.

If the above-described configuration is modified into the principle block diagram of Figure 4, the transfer function GX(S) can be expressed by the equation (9).

$$GX(S) = \frac{(1-GLA)GLC}{1+GLA \cdot GLC \cdot GLH(S)} \tag{9}$$

Assuming that the coefficient GLA is zero, the transfer function GX(S) becomes a mere coefficient GLC, and this permits a simplest configuration of the present invention.

Advantages derived from the aforementioned configuration will be described on the basis of experimental results.

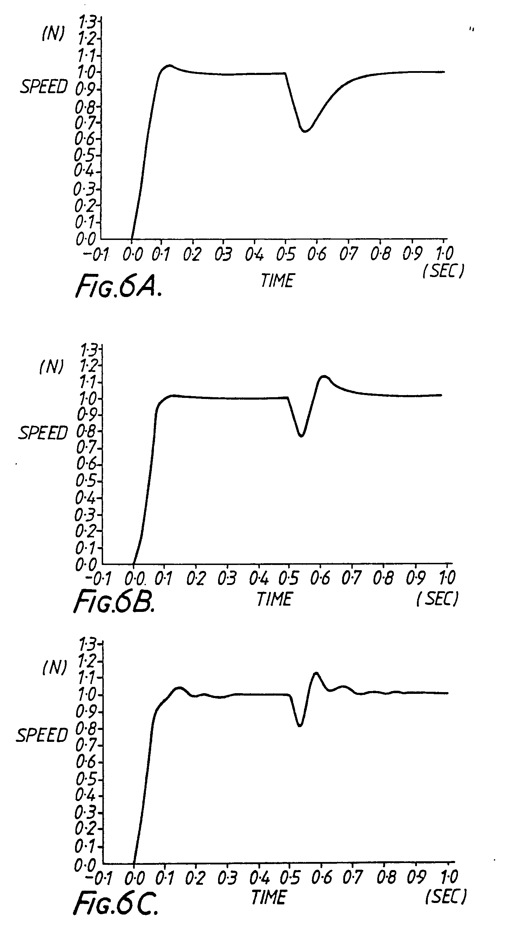

Figures 6A—6C are diagrams illustrating comparisons of responses in the case where the coefficient GLA is defined as zero and the coefficient GLC is varied. Responses are measured under the condition in which the speed command value is changed from 0 to 1 at a time of 0.0 second, and then at a time 0.5 second a constant load is applied.

Figure 6A shows the response in the case where the coefficient GLC=0, i.e. the response is identical with that of Figure 2. Figure 6B shows the response in the case where the coefficient GLC is set to the value being regarded as an optimum value. Figure 6C shows the response in the case where the coefficient GLC is set to a value greater than the optimum value, and there exist oscillatory phenomena, and it can be seen that the setting is inappropriate.

Figures 7A—7C are diagrams illustrating comparisons of responses in the case where the coefficient GLC is set to the value being regarded as the optimum value in Figure 6B, and the coefficient GLA is varied.

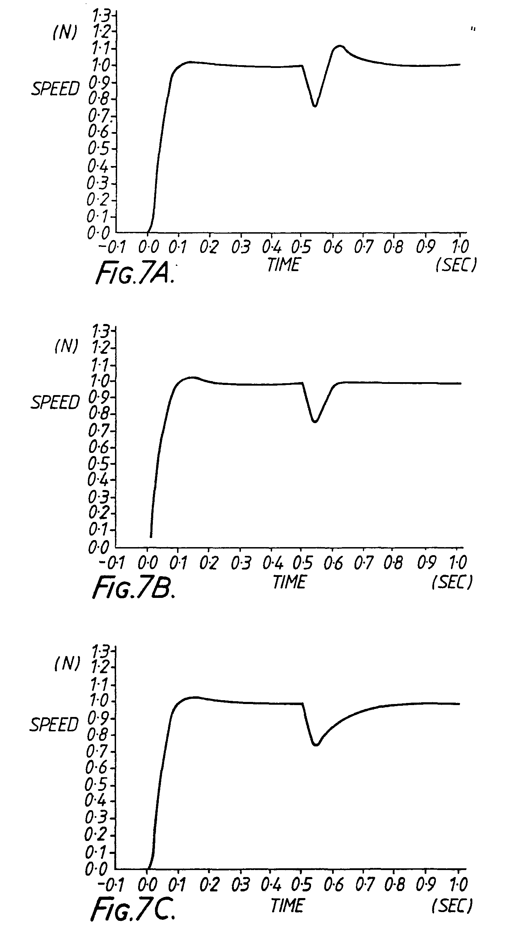

Figure 7A shows the response again in the case where the coefficient GLA=0, which is identical with that of Figure 6B for the sake of comparison. Figure 7B shows the response in the case where both the coefficients GLC and GLA are set to the value being regarded as the optimum value. Figure 7C shows the response in the case where the coefficient GLA is set to the value greater than the optimum value.

As shown in the experimental results, the adjustments for the optimum response are made such that, first, the coefficient GLA is set to zero and then the coefficient GLC is increased to the point immediately before that an oscillatory phenomenon appears. This can reduce the speed reduction that inevitably occurs upon the disturbance response, however, overshooting appears when the speed recovers, so that, next, the coefficient GLA is increased until that the overshooting disappears, whereby the optimum response can be readily achieved.

When comparison is made between the response in the conventional example of Figure 6A and the response in the embodiment according to the present invention of Figure 7B, it is understood that only the disturbance response is improved with substantially no change in the command value response. The speed reduction upon the disturbance response is reduced to 70%, and the response time until the instant at which the speed recovers is shortened to 30%, in addition, the ratio of the command value response time and the disturbance response time is approximately 1, and advantages derived from its improvement is extremely great.

Another advantage of the present invention besides the aforementioned is such that the command value response change with respect to variations in the force of inertia of the load can be reduced. For example, when the inertia is increased, greater torque is required to accelerate, however, the response change can be suppressed similarly to the case where the load torque is applied to this increment of the load. Further, this means that, even when the transfer function of the simulated transfer function block which is required for the present invention differs from the actual value to some extent, the advantages of the present invention can be exhibited so that the simulated transfer function is free from strict preciseness, consequently, the implementation thereof can be readily achieved.

In addition, even when a resonant system is constituted between the motor and the load, variations in the torque caused by resonance can be suppressed as variations in the load. For example, in the case of an elevator system, there is installed a lifting rope that constitutes a resonant system between the lifting motor and the cage which is the load, whereby riding comfort for the passengers is deteriorated, however, this can also be suppressed by utilising the embodiment according to the present invention as an extremely effective countermeasure.

Although the hereinbefore description has been made as to the case where the DC motor is controlled with a constant field, similarly other applications can also be implemented in such a manner that, when varying the field between the torque command value converter and the current command, there is additionally provided a variable coefficient block that corresponds to variations in the field, or that, when controlling an AC motor, there is additionally provided a block group that calculates so as to derive an AC current command value from the torque command value. Furthermore, the present invention is not limited to, in terms of a control system, the motor speed control system.

**Claims**

1. A control system comprising:
   detector means (5) for detecting the value (n) of a controllable variable;
   means (9) for producing a reference value (n*);
   control amplifier means (1), connected to receive said detected value (n) and said reference value (n*), and to produce a first command value (TA) for use in reducing any difference between the detected value (n) and said reference value (n*); and
   power converter means (2) for controlling said controlled variable (n) according to said first command value (TA),
   characterised by the provision of
   a control processing means (8), connected to receive said detected value (n) and said first command value (TA), and to produce a second command value (T*);
   said control processing means (8) including
   means (15) for providing a first signal (A) the Laplace transform of which equals the product of a first predetermined transfer function Gx(s) and the Laplace transform of said detected value (n),
   means (11, 13, 14) for providing a second signal (B) the Laplace-transform of which equals the product of a second transfer function 1+Gx(s) · GLH(s) and of the Laplace-transform of said first command value (TA), and;
   means (12) for providing as said second command value (T*) the difference between said first (A) and second (B) signals, wherein the transfer function GLH(s) is the simulation of the transfer function of the process (GL(s)=n(s)/T*(s)) and wherein the power converting means (2) is controlled according to said second command value (T*).

2. A control system according to claim 1, characterised in that said predetermined transfer function GX(S) is a transfer function that can be expressed by:

$$\frac{(1-GLA)GLC}{1+GLA \cdot GLC \cdot GLH(S)}$$

where GLA and GLC are defined as predetermined coefficients.

3. A motor speed control system comprising:
   speed detector means (5) for detecting the speed (n) of the motor (3, 4);
   means for producing a reference speed value (n*);
   speed control amplifier means (1) connected to receive said detected speed value (n) and said reference speed value (n*), and to produce a first command value (TA) for use in reducing any difference between the detected speed value (n) and said reference speed value (n*); and
   power converter means (2) for controlling said speed (n) of the motor (3, 4) according to said first command value (TA);
   characterised by the provision of
   control processing means (8), connected to receive said detected speed value (n) and said first command value (TA) and to produce a second command value (T*);
   said control processing means (8) including
   means (15) for providing a first signal (A) the Laplace transform of which equals the product of a first predetermined transfer function Gx(s) and the Laplace transform of said detected value (n),
   means (11, 13, 14) for providing a second signal (B) the Laplace-transform of which equals the product of a second transfer function 1+Gx(s) · GLH(s) and of the Laplace-transform of said first command value (TA), and;
   means (12) for providing as said second command value (T*) the difference between said first (A) and second (B) signals, wherein the transfer function GLH(s) is the simulation of the transfer function of the process (GL(s)=n(s)/T*(s)) and wherein the power converting means (2) is controlled according to said second command value (T*).

4. A motor speed control system according to claim 3, characterised in that said predetermined transfer function GX(S) is a transfer function that can be expressed by

# EP 0 163 456 B1

$$\frac{(1-GLA)GLC}{1+GLA \cdot GLC \cdot GLH(S)} \qquad \text{,,}$$

5. A motor speed control system according to claim 3 or 4, characterised in that said motor is an AC motor.

6. A motor speed control system according to claim 3 or 4, characterised in that said motor is a DC motor.

## Patentansprüche

1. Regelsystem mit
—einer Meßeinrichtung (5) für den Wert (n) einer steuerbaren Variablen,
—einer Einrichtung (9) zur Erzeugung eines Bezugswertes (n*),
—einer Steuerverstärkereinrichtung (1), die zur Aufnahme des Meßwertes (n) und des Bezugswertes (n*) angeschlossen ist und die einen ersten Befehlswert (TA) erzeugt, der zur Reduzierung jeglicher Abweichung zwischen Meßwert (n) und Bezugswert (n*) zu verwenden ist, und
—einer Leistungswandler-Einrichtung (2) zur Steuerung der gesteuerten Variablen (n) in Abhängigkeit von dem ersten Befehlswert (TA), gekennzeichnet durch
—eine Steuerprozessor-Einrichtung (8), die zur Aufnahme des Meßwerts (n) und des Bezugswerts (n*) angeschlossen ist und die einen zweiten Befehlswert (T*) erzeugt,
—wobei die Steuerprozessor-Einrichtung (8) aufweist
—eine Einrichtung (15) zur Erzeugung eines ersten Signals (A), dessen Laplace-Transformierte gleich dem Produkt einer ersten vorbestimmten Übertragungsfunktion Gx(s) mit der Laplace-Transformierten des Meßwertes (n) ist,
—Einrichtungen (11, 13, 14) zur Erzeugung eines zweiten Signals (B), dessen Laplace-Transformierte gleich dem Produkt einer zweiten Übertragungsfunktion 1+Gx(s) · GLH(s) mit der Laplace-Transformierten des Befehlswertes (TA) ist, und
—eine Einrichtung (12) zur Erzeugung des zweiten Befehlswertes (T*) als Differenz zwischen dem ersten (A) und dem zweiten (B) Signal, wobei die Übertragungsfunktion GLH(s) die Simulation der Übertragungsfunktion des Vorgangs (GL(s)=n(s)/T*(s)) ist und wobei die Leistungswandler-Einrichtung (2) in Abhängigkeit von dem zweiten Befehlswert (T*) gesteuert wird.

2. Regelsystem nach Anspruch 1, dadurch gekennzeichnet, daß die vorbestimmte Übertragungsfunktion GX(S) eine Übertragungsfunktion ist, die ausgedrückt werden kann durch:

$$\frac{(1-GLA)GLC}{1+GLA \cdot GLC \cdot GLH(S)}$$

wobei GLA und GLC vorgegebene Koeffizienten sind.

3. Motorgeschwindigkeits-Regelsystem mit
—einer Geschwindigkeitsmeßeinrichtung (5) zur Messung der Geschwindigkeit (n) des Motors (3, 4),
—einer Einrichtung zur Erzeugung eines Bezugsgeschwindigkeitswertes (n*),
—einer Geschwindigkeits-Steuerverstärkereinrichtung (1), die zur Aufnahme des Geschwindigkeitsmeßwertes (n) und des Geschwindigkeitsbezugswertes (n*) angeschlossen ist und die einen ersten Befehlswert (TA) erzeugt, der zur Reduzierung jeglicher Abweichung zwischen Geschwindigkeitsmeßwert (n) und Geschwindigkeitsbezugswert (n*) zu verwenden ist, und
—einer Leistungswandler-Einrichtung (2) zur Steuerung der Geschwindigkeit (n) des Motors (3, 4) in Abhängigkeit von dem ersten Befehlswert (TA), gekennzeichnet durch
—eine Steuerprozessor-Einrichtung (8), die zur Aufnahme des Geschwindigkeitsmeßwertes (n) und des ersten Befehlswertes (TA) angeschlossen ist und die einen zweiten Befehlswert (T*) erzeugt,
—wobei die Steuerprozessor-Einrichtung (8) aufweist
—eine Einrichtung (15) zur Erzeugung eines ersten Signals (A), dessen Laplace-Transformierte gleich dem Produkt einer ersten vorbestimmten Übertragungsfunktion Gx(s) mit der Laplace-Transformierten des Meßwertes (n) ist,
—Einrichtungen (11, 13, 14) zur Erzeugung eines zweiten Signals (B), dessen Laplace-Transformierte gleich dem Produkt einer zweiten Übertragungsfunktion 1+Gx(s) · GLH(s) mit der Laplace-Transformierten des ersten Befehlswertes (TA) ist, und
—einer Einrichtung (12) zur Erzeugung des zweiten Befehlswertes (T*) als Differenz zwischen dem ersten (A) und dem zweiten (B) Signal, wobei die Übertragungsfunktion GLH(s) die Simulation der Übertragungsfunktion des Vorgangs (GL(s)=n(s)/T*(s)) ist und wobei die Leistungswandler-Einrichtung (2) durch den zweiten Befehlswert (T*) gesteuert wird.

4. Regelsystem nach Anspruch 1, dadurch gekennzeichnet, daß die vorbestimmte Übertragungsfunktion GX(S) eine Übertragungsfunktion ist, die ausgedrückt werden kann durch:

7

$$\frac{(1-GLA)GLC}{1+GLA \cdot GLC \cdot GLH(S)}$$

wobei GLA und GLC vorgegebene Koeffizienten sind.

5. Motorgeschwindigkeits-Regelsystem nach Anspruch 3 oder 4, dadurch gekennzeichnet, daß der Motor ein Wechselstrommotor ist.

6. Motorgeschwindigkeits-Regelsystem nach Anspruch 3 oder 4, dadurch gekennzeichnet, daß der Motor ein Gleichstrommotor ist.

**Revendications**

1. Système de commande ou de réglage qui comprend:

des moyens pour mesurer ou pour déterminer la valeur ou la grandeur (n) d'une variable réglable;

des moyens (9) pour produire une grandeur de référence (n*);

un amplificateur de commande (1), conçu pour recevoir ladite grandeur mesurée (n) et ladite grandeur de référence (n*) et pour produire une première grandeur de commande (TA) destinée à servir à réduire les différences éventuelles entre la grandeur mesurée (n) et ladite grandeur de référence (n*); et

un convertisseur de puissance (2) pour régler ladite variable mesurée (n) en fonction de ladite première grandeur de commande (TA), est caractérisé en ce qu'il comprend aussi:

des moyens de traitement de commande (8), connectés pour recevoir ladite grandeur mesurée (n) et ladite première grandeur de commande (TA), et pour produire une seconde grandeur de commande (T*);

lesdits moyens de traitement de commande (8) incluant:

des moyens (15) pour produire un premier signal (A) dont la transformée de Laplace est égale au produit d'une première fonction de tranfert prédéterminée Gx(s) et de la transformée de Laplace de ladite grandeur mesurée (n);

des moyens (11, 13, 14) pour produire un second signal (B) dont la transformée de Laplace est égale au produit d'une seconde fonction de transfert I+Gx(s) · GHL(s) et de la transformée de Laplace de ladite première grandeur de commande (TA), et;

des moyens (12) pour produire en tant que ladite seconde grandeur de commande (T*) la différence entre ledit premier signal (A) et ledit second signal (B), où la fonction de transfert GLN(s) est une simulation de la fonction de transfert du processus (GL(s)=n(s)/T*(s)) et où les moyens de conversion de puissance sont commandés conformément à ladite seconde grandeur de commande (T*).

2. Système de réglage ou de commande selon la revendication 1, caractérisé en ce que ladite fonction de transfert prédéterminée GX(S) peut être exprimée comme suit:

$$\frac{(1-GLA)GLC}{1+GLA * GLC * GLH(S)}$$

où GLA et GLC sont des coefficients prédéterminés.

3. Système de réglage de vitesse de moteur qui comprend des moyens (5) pour mesurer la vitesse (n) du moteur (3, 4);

des moyens pour produire une grandeur de référence de vitesse (n*);

un amplificateur de réglage de vitesse (1) connecté pour recevoir ladite grandeur de vitesse mesurée (n) et ladite grandeur de vitesse de référence (n*), et pour produire une première grandeur de commande (TA) pouvant être utilisée pour réduire les différences éventuellement entre ladite grandeur de vitesse mesurée (n) et ladite grandeur de vitesse de référence (n*); et

des moyens de conversion de puissance (2) pour régler ladite vitesse (n) du moteur (3, 4) conformément à ladite première grandeur de commande (TA);

caractérisé par la présence de:

moyens de traitement de commande (8), connectés pour recevoir ladite grandeur de vitesse mesurée (n) et ladite première grandeur de commande (TA) et pour produire une seconde grandeur de commande (T*);

lesdits moyens de traitement de commande (8) incluant:

des moyens (15) pour produire un premier signal (A) dont la transformée de Laplace est égale ou produit d'une première fonction de transfert prédéterminée (Gx(s)) et la transformée de Laplace de ladite grandeur mesurée (n);

des moyens (11, 13, 14) pour produire un second signal (B) dont la transformée de Laplace est égale au produit d'une seconde fonction de transfert 1+Gx(s)*GLH(s) et de la transformée de Laplace de ladite première grandeur de commande (TA); et,

des moyens (12) pour produire en tant que seconde grandeur de commande (T*) la différence entre ledit premier signal (A) et ledit second signal (B), la fonction de transfert GLH(s) étant une simulation de la fonction de transfert du processus (GL(s)=n(s)T*(s)), tandis que les moyens de conversion de puissance (2) sont commandés ou réglés conformément à ladite seconde grandeur de commande (T*).

4. Système de commande ou de réglage de moteur selon la revendication 3, caractérisé en ce que ladite fonction de transfert prédéterminée GX(S) est une fonction de transfert qui peut s'écrire:

$$\frac{(1-GLA)GLC}{1+GLA * GLC * (GLH(S))}$$

5. Système de commande ou de réglage de moteur selon la revendication 3 ou 4, caractérisé en ce que ledit moteur est un moteur A.C.

6. Système de commande ou de réglage de moteur selon la revendication 3 ou 4, caractérisé en ce que ledit moteur est un moteur D.C.

PRIOR ART

Fig.1.

PRIOR ART

Fig.2.

Fig.3.

REFERENCE VALUE SETTING UNIT 9

SPEED CONTROL AMPLIFIER 1

CONTROL PROCESSING UNIT 8

POWER CONVERTER 2

CONTROLLED SYSTEM 7

ARMATURE 3

FIELD WINDING 4

SPEED DETECTOR 5

LOAD 6

$n^*$

$T_A$

$T^*$

$T \propto I$

$n$

EP 0 163 456 B1

SPEED
CONTROL
AMPLIFIER
1

CONTROL
PROCESSING
UNIT
8

BLOCK
GROUP
16

$T_L$

$n^*$ → GSP(S) → $T_A$

11 B 12 $T^*$

2

GTRQ(S) → T + 17 → $\frac{1}{Js}$ 7

GL(S)

13 GLH(S) → 14 GX(S)

A 15 GX(S)

*Fig.4.*

SPEED
CONTROL
AMPLIFIER
1

CONTROL
PROCESSING
UNIT
8

BLOCK
GROUP
16

$T_L$

$n^*$ → GSP(S) → $T_A$ 18 C

19 $T^*$

2

GTRQ(S) → T + 17 → $\frac{1}{Js}$ 7

D

GL(S)

13 GLH(S) 20 + 21 GLC

22 GLA

*Fig.5.*

3

FIG.6A.

FIG.6B.

FIG.6C.

*Fig.7A.*

*Fig.7B.*

*Fig.7C.*